Europäisches Patentamt

European Patent Office

Office européen des brevets

(11) Publication number: 0 044 719
A1

## (12) EUROPEAN PATENT APPLICATION

(21) Application number: 81303283.6

(22) Date of filing: 16.07.81

(51) Int. Cl.³: F 16 L 21/02
F 16 L 55/16

(30) Priority: 18.07.80 GB 8023525

(43) Date of publication of application:
27.01.82 Bulletin 82/4

(84) Designated Contracting States:
AT BE DE FR IT NL

(71) Applicant: BTR INDUSTRIES LIMITED
Silvertown House Vincent Square
London, SW1P 2PL(GB)

(72) Inventor: Smith, Edward Peter
15 Linden Road Barton under Needwood
Burton on Trent Staffordshire(GB)

(74) Representative: Mayes, Stuart David et al,
BOULT, WADE & TENNANT 27 Furnival Street
London, EC4A 1PQ(GB)

(54) Improvements in apparatus for sealing pipes.

(57) A sealing clamp comprises a deformable member (10) having a series of longitudinal radially extending fins (11) defining channels (12) therebetween. Into the channels (12) are inserted clamping members (13). Tensioning bands (17) are secured around the clamping members (13) to urge the deformable member (10) against pipe walls (15), (16).

FIG. 1.

EP 0 044 719 A1

# IMPROVEMENTS IN APPARATUS FOR SEALING PIPES

The invention relates to apparatus for sealing pipes. More particularly but not exclusively, the apparatus according to the invention is designed for sealing leaking pipe joints without the need for interrupting the flow of fluid in a pipeline, and it may be used on original installation of a pipeline for joining ends of pipes together.

According to the invention there is provided apparatus for sealing pipes, which apparatus comprises a sealing member of deformable material for surrounding a joint between pipes in use, the member having a multiplicity of longitudinal channels on the outside thereof, a multiplicity of elongate clamping elements engageable in the channels, and means for exerting a radially inward force on the clamping elements for urging the sealing member against the external surface of the pipes in use.

The sealing member is preferably tubular, and may have at least one longitudinal slit formed therein.

At least one of each channel and associated clamping member is preferably tapered such that insertion of the clamping members into the channels compresses the material of the sealing member between the channels.

One or both ends of the sealing member may be of greater thickness than the remainder of the member.

The sealing member may comprise portions of different diameters and an annular ring therebetween for sealing pipes of different external diameters, or for bridging obstructions, the clamping members being similarly stepped.

The means for exerting a radially inward force on the clamping members may comprise one or more tapes, bands or chains extending around or through the clamping members, and means for fastening the tapes, bands or chains around the clamping members.

The fastening means may comprise a buckle, a ratchet or a spring loaded tensioning device.

Alternatively, the means for exerting a radially inward force on the clamping members may comprise a pair of end rings each having a tapered inner surface for sliding over inclined end surfaces of the clamping members , and means for drawing together the end rings.

The clamping members may be elastically deformable tubes.

By way of example, embodiments of apparatus for sealing pipes and modifications thereto according to the invention will now be described with reference to the accompanying drawings, in which:-

Figure 1 is a general view of a sealing clamp joining two plain ends of pipe together;

Figure 2 is a part section of the embodiment of Figure 1;

Figure 3 and 4 are part sections of further embodiments of sealing clamps for sealing other types of joint;

Figure 5 is a part end view of the clamp shown in Figure 1;

Figures 6 and 7 show two alternative shapes for the parting line of the clamp;

Figure 8 is a part end view of an embodiment of a sealing clamp to reduce the circumferential pressure in the rubber and increase the radial forces;

Figures 9,10 and 11 show various means of indefinitely maintaining sealing forces on the sealing clamp; and

Figure 12 shows an alternative method of actuating the sealing clamp.

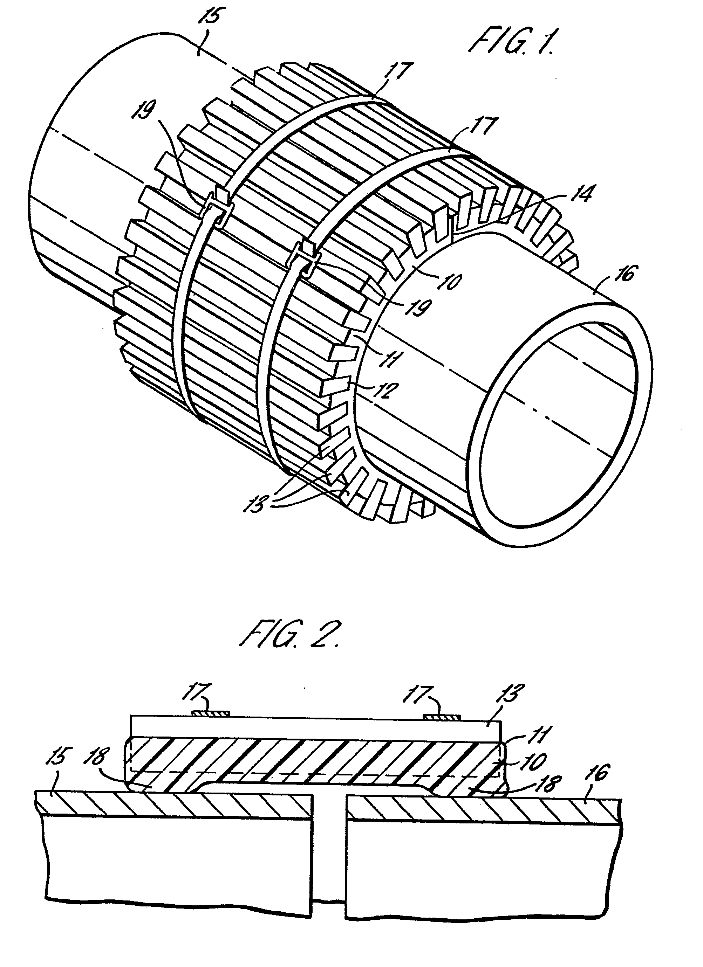

A sealing clamp comprises a deformable member, 10, having a series of longitudinal radially extending fins 11 defining channels 12 therebetween. Into the channels 12 are inserted a number of clamping members 13. The deformable member 10 may be formed as a flat strip of appropriate length or may be tubular. When used for repair of an existing pipe joint a slit 14 is formed in one of the radial fins 11 to enable the member to be wrapped around the pipe joint. In its free state before clamping loads are applied, the pipe clamp is of sufficient diameter to give a substantial gap between its inner surface and the outer surfaces of pipes 15 and 16. When the clamp is tightened, which, in one embodiment of the invention, (Figure 1) is by steel bands 17, the clamping members 13 are forced radially inwardly compressing the deformable radial fins 11 on the member 10 circumferentially and forcing together the faces of the slit 14. Further tightening forces the inner surface of the deformable member against the outer surfaces of the pipes thus effecting a seal. One alone, two, or more than two steel bands 17 may be used. The bands are secured by buckles 19.

In one embodiment of the invention the deformable member 10 is made of natural or synthetic rubber, or any polymer with rubber like flow and recovery characteristics chosen for its particular hardness and resistance to environmental factors. The clamping members 13 may be of any suitable plastic, metal or composite material. They may be of one piece solid construction or a multiplicity of interlocking, hinged, joined, independently moving parts.

In another embodiment, for sealing high pressures, the clamping members 13 are of a hard metal and the deformable member is of a ductile metal or plastic. Inwardly facing circumferential bulges or ribs 18 are incorporated in the deformable member 10 to increase the pressure on the sealing faces and to accommodate misalignment and movement of the pipes, although the bulges or ribs 18 are not essential.

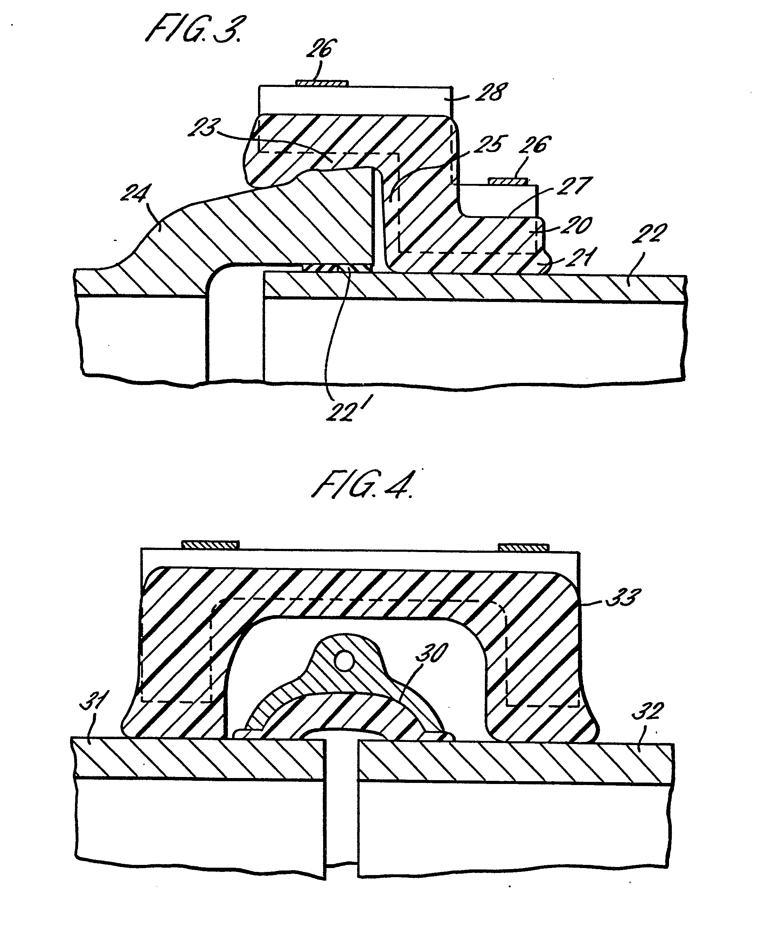

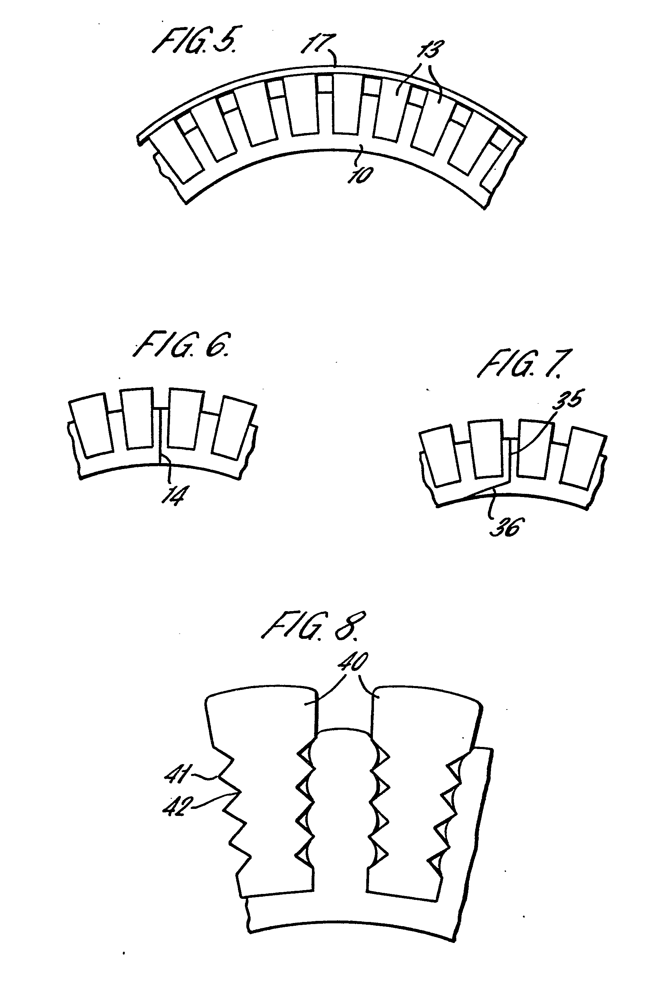

Apparatus according to the invention may be used for sealing bell and spigot joints as indicated in Figure 3. A deformable member 20, is formed with a portion 21 of reduced diameter to seal against a spigot 22 and a portion 23 of greater diameter to seal against the circumference of the socket 24. The original seal between the spigot and socket is an annular sealing member 22'. The two portions are integrally connected by an annular portion 25. Channels between radially extending longitudinal ribs 27 are filled. with substantially rigid clamping members, 28 which are formed in a similar stepped shape, and the deformable member 20 is secured around the pipe joint by steel bands 26.

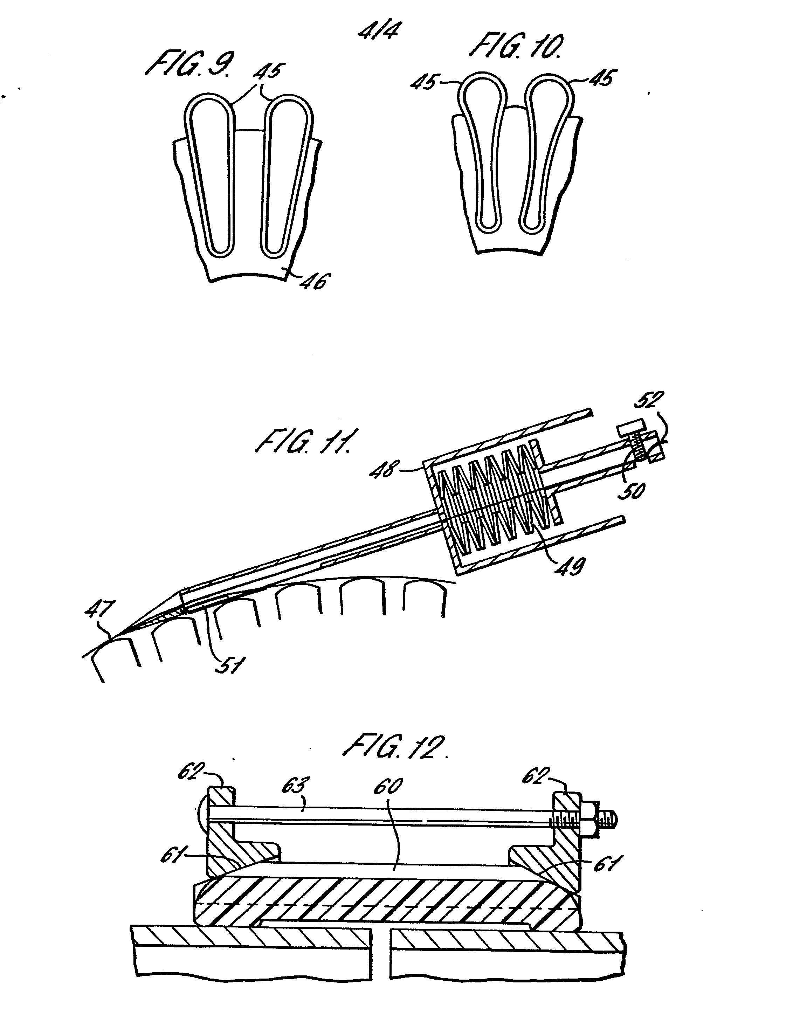

As shown in Figure 4, a sealing clamp 33 according to the invention may also be used to seal from one pipe end 31 to an adjacent pipe end 32 bridging the intervening original jointing means 30. It will be appreciated that the original jointing means may be of any type provided the repair sealing clamp 33 is of suitable geometry to fit over it.

As shown in Figure 5, the radially extending fins 11 on the deformable member 10 are conviently parallel sided, whilst the relatively rigid clamping members 13  are formed with inwardly tapering sides but it will be appreciated that the taper angle could be on the fins alone or shared between the fins and the relatively rigid members.

In the figures the radially extending fins are shown to be shorter in a radial direction than the relatively rigid clamping members so that after tightening there will be no interference between the deformable member and the tension bands 17.  However, the fins may be of equal length in a radial direction to the rigid members without affecting the functioning of the apparatus.

The jointing slit 14 in the deformable member may be a flat radially extending plane through one of the radial fins (Figure 6) or may be combination of a radially extending portion 35 and an inclined portion 36 (Figure 7). Alternatively the slit may be formed with protrusions on one face mutually interlocking with recesses on the other in any suitable configuration.

The resistance to circumferential compression of the clamp before it seals against the pipe surface may be adjusted by material selection or by varying the ratio of the circumferential thickness of fins to the thickness of the relatively rigid members. As shown in Figure 8, in a modified arrangement, rigid members 40 are provided with serrations 41 and 42 into which the deformable fins will readily deflect. Alternatively the fins may be provided with such serrations and the rigid members have planar sides. In another modification (not shown) both the fins and the relatively rigid clamping members are equipped with mutually interlocking serrations to reduce outward extrusion of the fins. Such outward extrusion may also be inhibited by the fins and the rigid members being chemically bonded together.

A phenomenon, frequently leading to failure of seals made from polymeric materials, is that of stress relaxation or creep. The stresses induced in the material during installation relax over a long period of time so that ultimately insufficient pressures are applied to the mating faces to prevent leakage of the fluid from the seal. One embodiment of this invention which overcomes this problem is illustrated in Figure 9 and 10. Relatively rigid clamping elements 45 are made as tubes from a metal with good spring characteristics. When the clamp is tightened the compression of the fins of deformable member 46 forces the walls of the tubular elements together at strains below the elastic limit of the material of the tubes. As stress relaxation takes place and the fins creep radially outwards the walls of the tubular elements maintain the forces on the seal.

In an alternative embodiment (Figure 11) tensioning bands 47 are provided with a spring loaded tension maintaining system 48. One end 51 of the band 47 is attached to the tensioning system and the other end passed round or through the sealing clamp and through the system. The band is tightened by any suitable tightening tool thereby compressing both the sealing clamp and tensioning springs 49 before a locking mechanism 50 is applied. It will be understood that the device shown in Figure 11 is for illustration only and a number of alternative spring loaded tensioning mechanisms can be used.

An alternative method of actuating the sealing clamp is shown in Figure 12. Substantially rigid clamping members 60 are tapered on the outer surface of each end. The tapered portions are contacted by an inner frustro-conical surface 61 of two end rings 62. The end rings 62 may each be of two or more

identical and mutually linking arcuate shapes to facilitate fitting round existing pipes. In one embodiment, the end rings have a number of lugs on their outer periphery through which bolts 63 are positioned. Tightening of these bolts draws the end rings 62 towards each other forcing the clamping members 60 radially inwards according to well known collet principles. In this embodiment conical springs (not shown) may be placed between the nut and/or the head of the bolt and the end rings to maintain the clamping load indefinitely.

It will be appreciated that other means of forcing the clamping members radially inwardly can be used.

CLAIMS:

1.   Apparatus for sealing pipes, which apparatus comprises a sealing member (10) of deformable material for surrounding a joint between pipes (15 and 16) in use, the member (10) having a multiplicity of longitudinal channels (12) on the outside thereof, a multiplicity of elongate clamping elements (13) engageable in the channels (12), and means (17 and 19) for exerting a radially inward force on the clamping elements (13) for urging the sealing member (10) against the external surface of the pipes (15 and 16) in use.

2.   Apparatus as claimed in claim 1, wherein the sealing member (10) is tubular.

3.   Apparatus as claimed in claim 2, wherein the tubular sealing member (10) has at least one longitudinal slit (14) formed therein.

4.   Apparatus as claimed in claim 2 or claim 3, wherein the sealing member (10) comprises portions (21 and 23) of different diameters and an annular ring (25) between, the clamping members (28) being similarly stepped.

5. Apparatus as claimed in any preceding claim, wherein at least one of each channel (12) and associated clamping member (13) is tapered such that insertion of the clamping members into the channels compresses the material of the sealing member (10) between the channels.

6. Apparatus as claimed in any preceding claim, wherein one or both ends (18) of the sealing member (10) is of greater thickness than the remainder of the member.

7. Apparatus as claimed in any preceding claim, wherein the means (17 and 19) for exerting a radially inward force on the clamping members (13) comprises one or more tapes, bands or chains (17) extending around or through the clamping members and means (19) for fastening the tapes, bands or chains around the clamping members.

8. Apparatus as claimed in claim 7, wherein the fastening means comprises a buckle (19).

9. Apparatus as claimed in claims 7, wherein the fastening means comprises a ratchet.

1/4

FIG. 1.

FIG. 2.

FIG.3.

FIG.4.

FIG. 5.

17   13

10

FIG. 6.

14

FIG. 7.

35

36

FIG. 8.

40

41

42

414

FIG. 9.    45

FIG. 10.

45    45

46

FIG. 11.

52

48

50

49

47

51

FIG. 12.

62    63    60    62

61    61

Application number

**EP 81 30 3283.6**

European Patent Office

**EUROPEAN SEARCH REPORT**

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 2 052 792 (VAN DE KERKE) <br> * page 3, line 28 to page 4, line 2; fig. 2, 3 * <br> --- | 1,2,6, 7 | F 16 L 21/02 <br> F 16 L 55/16 |
| | GB - A - 1 420 073 (AVON RUBBER) <br> * column 2, line 117 to column 3, line 40; fig. 1, 2 * <br> --- | 1 | |
| | US - A - 3 265 782 (ROSENGARTEN JR. et al) <br> * column 4, lines 3 to 39; fig. 8, 10 * <br> --- | 1 | TECHNICAL FIELDS SEARCHED (Int. Cl.³) |
| A | GB - A - 1 479 605 (HICKS) <br> --- | | F 16 L 21/00 <br> F 16 L 27/00 |
| A | GB - A - 1 366 139 (HEPWORTH IRON) <br> --- | | F 16 L 33/00 <br> F 16 L 55/00 |
| A | US - A - 3 711 129 (SMATHERS et al.) <br> --- | | |
| A | BE - A - 717 022 (MENGEOT) <br> ---- | | |

CATEGORY OF CITED DOCUMENTS

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 21-09-1981 | SCHLABBACH |

EPO Form 1503.1 06.78